# FASCICULE DE BREVET EUROPEEN

(11) **EP 2 018 293 B1**
(45) Date de publication et mention de la délivrance du brevet: **09.06.2010**
(21) Numéro de dépôt: 07731078.7
(22) Date de dépôt: 02.03.2007
(51) Int. Cl.: B60N 2/30

(54) **SIEGE ESCAMOTABLE NOTAMMENT DE RANG 3**
VERSTAUBARER SITZ, INSBESONDERE FÜR DIE DRITTE SITZREIHE
STOWABLE SEAT IN PARTICULAR FOR THE THIRD ROW

(30) Priorité: 12.05.2006 FR 0604246
(43) Date de publication de la demande: 28.01.2009
(73) Titulaire: GRUPO ANTOLIN-INGENIERIA, S.A., 09080 Burgos (ES)
(72) Inventeur: DUCHATEAU, Jean, 43330 Pont Salomon (FR); HAMTACHE, Nordine, 42700 Firminy (FR)
(74) Mandataire: Delorme, Nicolas
(86) Numéro de dépôt international: PCT/FR2007/000379
(87) Numéro de publication internationale: WO 2007/132074

(56) Documents cités:
- EP-A1- 1 454 788
- WO-A-2005/095150
- FR-A- 2 856 903

## Description

La présente invention concerne un siège pour véhicule automobile.

Certains véhicules possèdent trois rangées de sièges dont le rang est numéroté de 1 à 3 en allant de l'avant à l'arrière du véhicule.

Les sièges de rang 1 et 2 sont placés respectivement en regard des portes avant et arrière du véhicule tandis que les sièges de rang 3 sont positionnés dans la zone du véhicule qui constitue l'espace de chargement du véhicule.

Les sièges de rang 3 (par siège, on entend un siège individuel ou une banquette pouvant accueillir deux ou trois passagers) peuvent présenter une structure permettant leur escamotage dans une cuvette prévue dans le plancher du véhicule lorsque leur utilisation n'est pas requise. De cette manière, l'espace de chargement du véhicule retrouve sa pleine capacité.

La faculté d'escamotage de sièges de rang 3 s'avère donc extrêmement utile mais se fait généralement en contre partie d'un certain inconfort de ces sièges ; ceci en fait généralement des sièges d'appoint réservés à des personnes de petite taille pour de courts trajets.

L'inconfort des sièges escamotables de rang 3 ou éventuellement de rang 2 tient au fait que ces sièges présentent généralement des garnitures de faible épaisseur. De plus, le dossier est généralement positionné de manière fixe par rapport à l'assise lorsque le siège est déployé ; cette disposition est préjudiciable au bon confort du passager qui ne peut pas incliner vers l'arrière le dossier de son siège pour une position plus relaxante.

Un autre point d'inconfort des sièges escamotables tient au fait que l'assise est généralement dans une position relativement basse par rapport au plancher. Cela se traduit par une position très inconfortable du passager dont les jambes forment avec le tronc un angle exagérément aigu. Le passager peut avoir l'impression d'avoir "les genoux dans le menton" car lorsqu'il est assis dans un siège escamotable classique, son bassin est insuffisamment surélevé par rapport au plancher du véhicule.

Par ailleurs, les différentes cinématiques qui permettent, d'une part, le maintien d'un siège dans une configuration déployée et d'autre part l'escamotage dans une cuvette présentent généralement un ensemble de bielles articulées qui en font des mécanismes complexes, générateur de bruits parasites et susceptibles de coincements.

On connaît par ailleurs le document WO 2005/095150 qui montre un siège placé en avant d'une cuvette de rangement, Ce siège peut pivoter par rapport à une liaison pivot située à la jonction de la partie avant de la cuvette et de la partie arrière du siège. D'autre part le document EP 1 454 788 décrit un siège dont le piétement surplombe la cuvette de rangement du siège.

Il apparaît, donc, que des améliorations sont souhaitables dans le domaine des sièges escamotables.

Un but de l'invention est de fournir un siège escamotable qui offre un confort satisfaisant à un passager qui y prendrait place.

Un autre but de l'invention est de fournir un siège escamotable robuste qui soit d'un fonctionnement fiable.

L'invention a pour objet un siège pour véhicule automobile pouvant prendre une configuration déployée ou une configuration escamotée dans laquelle le siège est rangé dans une cuvette ménagée dans le plancher du véhicule ; ce siège comprend un piétement en surplomb de la cuvette et une assise sur laquelle est articulé un dossier pouvant faire passer le siège de la configuration déployée à une configuration tablette dans laquelle le dossier est rabattu contre l'assise ;
caracterisé en ce que :
l'assise est reliée au piètement par une première liaison pivot et par des premiers moyens de liaison déconnectable dont la déconnexion permet, par une rotation primaire, de faire passer le siège de sa configuration tablette à une configuration compacte dans laquelle l'assise pivote de sensiblement 90° en direction de la cuvette pour se mettre sensiblement perpendiculaire au plancher du véhicule, et en outre, le piètement est relié au plancher par une seconde liaison pivot et par des seconds moyens de liaison déconnectable dont la déconnexion permet, par une rotation secondaire, de faire passer le siège de sa configuration compacte à sa configuration escamotée dans laquelle le piètement pivote sensiblement de 90° pour se ranger dans la cuvette, le dossier venant en appui contre la paroi de fond de la cuvette, l'assise étant superposée sur le dossier et le piètement se trouvant de part et d'autre de l'assise et du dossier.

Un des points importants de l'invention apparaît donc être le fait que la décomposition de l'escamotage du siège donne deux mouvements simples à savoir une rotation primaire par laquelle l'assise bascule par rapport au piétement pour se placer perpendiculairement au plancher et une rotation secondaire par laquelle le piètement pivote d'un quart de tour pour venir se ranger dans la cuvette.

Le siège selon l'invention peut, par ailleurs, offrir un confort satisfaisant ; ce résultat est dû à la conjugaison de deux aspects de l'invention.

Tout d'abord en configuration escamotée, l'assise et le dossier occupent à eux seuls la profondeur de la cuvette puisque que le piètement vient se placer de part et d'autre de ces derniers. Ceci fait qu'il est possible d'employer, pour le dossier et pour l'assise, des garnitures suffisamment épaisses pour un bon confort du siège. Ensuite pour se ranger dans la cuvette, le piètement est uniquement pivoté de 90° ; cette disposition fait que le piètement peut profiter de toute la cote longitudinale de la cuvette pour se replier. Le fait que la longueur du piètement ne soit pas limitée fait que, en position déployée, l'assise peut se trouver à une hauteur importante du plancher, ce qui est un gage de confort pour un passager.

Les caractéristiques complémentaires ci-après font l'objet des revendications dépendantes.

Dans une forme de réalisation préférée, le piètement comprend, positionnées de part et d'autre de l'assise, deux flasques sensiblement quadrangulaires dont un premier coté reçoit la liaison pivot avec le plancher et la liaison déconnectable avec plancher et dont un second coté opposé au premier reçoit la liaison pivot avec l'assise et la liaison déconnectable avec l'assise.

La réalisation du piètement par deux flasques latéraux est un point important de l'invention, car cette disposition fait que le piètement y compris en position escamotée reste de part et d'autre de l'assise et du dossier. Or, dans le sens transversal du véhicule, les contraintes dimensionnelles sont moins aigues que dans la profondeur de la cuvette pour laquelle les contraintes dimensionnelles sont très strictes.

Il peut s'avérer avantageux que les deux liaisons pivot qui assurent la liaison entre chacun des flasques et l'assise soient situées sensiblement au niveau du point milieu de chacune des faces latérales de l'assise. Cette disposition permet, lorsque le siège est dans une configuration compacte, de limiter l'encombrement du siège.

De préférence, le premier côté et le second côté de chaque flasque présentent une longueur I qui correspond sensiblement à la profondeur de la cuvette.

Pour rigidifier le piètement, une plaque transversale relie les deux flasques, au niveau de leur bord avant. On note que cette plaque transversale de rigidification n'interfère pas avec les mouvements d'escamotage du siège.

Les deux flasques sont fixés à deux profilés disposés de part et d'autre de la cuvette.

Selon une possibilité d'exécution, la liaison pivot assurant la liaison entre les deux flasques et le plancher du véhicule présente un axe qui s'étend entre les deux profilés, sur lequel sont engagés les deux flasques.

La liaison déconnectable assurant la liaison entre les deux flasques et le plancher du véhicule peut présenter un doigt disposé sur la face extérieure de chaque flasque pouvant s'engager dans une lumière pratiquée dans chaque profilé.

La liaison pivot assurant la liaison entre les deux flasques et l'assise comprend deux axes disposés sensiblement au milieu des cotés latéraux de l'assise, chacun de ses axes étant engagé dans un palier ménagé dans chacun des flasques.

La liaison déconnectable entre chacune des flasques et l'assise comprend deux doigts fixés sur chacun des flasques sur lesquels viennent s'engager des crochets embarqués sur l'assise.

On peut noter que l'un des flasques peut recevoir un élément d'ancrage d'une boucle de ceinture de sécurité.

Il est également envisageable qu'un système à secteurs dentés permette de régler la position angulaire du dossier par rapport à l'assise.

Pour sa bonne compréhension, l'invention est décrite en référence au dessin annexé représentant à titre d'exemple non limitatif une forme de réalisation d'un siège selon l'invention.
Figure 1 représente une section d'un véhicule présentant trois rangées de sièges dont la troisième rangée de sièges comprend un siège selon l'invention,
Figure 2 montre en perspective un siège selon l'invention sur lequel les éléments de garniture ont été retirés,

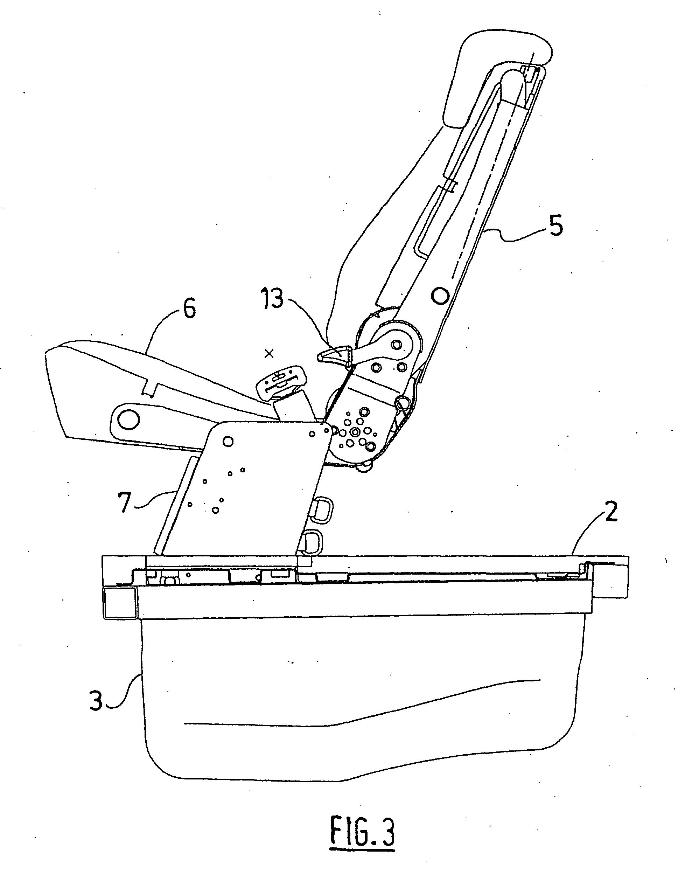

Figure 3 est une vue de côté de ce siège,
Figures 4 à 7 montrent le siège au cours de ses différentes étapes d'escamotage.

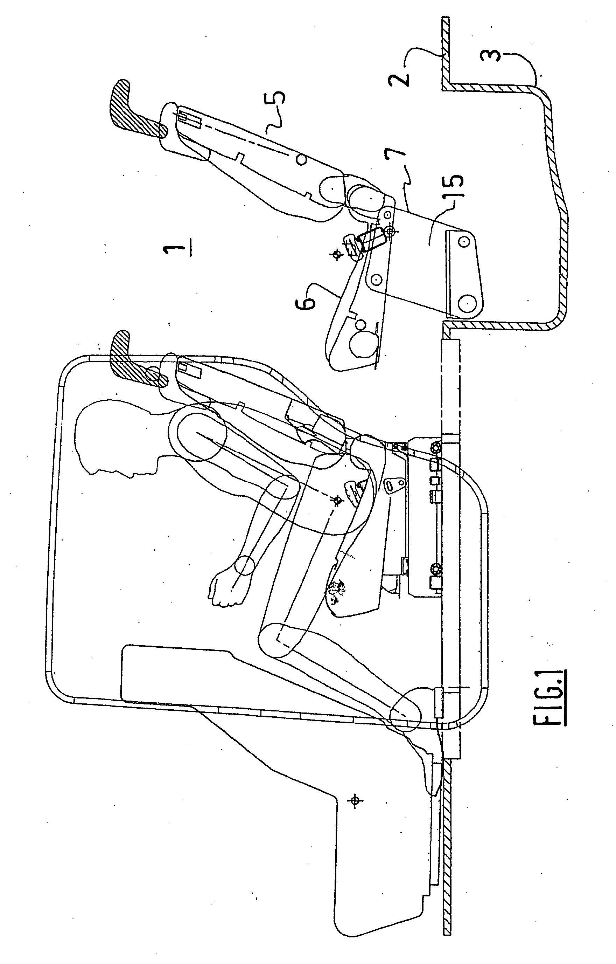

La figure 1 représente une section d'un véhicule qui possède trois rangées de sièges numérotés de 1 à 3. Les rangées de sièges 1 et 2 sont respectivement en face des portes avant et arrière du véhicule, tandis que le siège 1 de rang 3 est placé dans l'espace de chargement du véhicule.

Le siège de rang 3 peut être escamoté et, pour cela, le véhicule présente dans son plancher 2 une cuvette 3 de rangement que surplombe le siège 1; la cuvette 3 présente une forme sensiblement parallélépipédique.

Dans l'exemple représenté, le siège 1 se trouve en surplomb de la cuvette 3 au niveau de la partie avant de celle-ci (le terme avant se réfère à un référentiel positionné au centre de gravité du véhicule dont l'axe longitudinal correspond à la direction de déplacement du véhicule, l'axe transversal correspond à la largeur du véhicule et l'axe vertical correspond à la hauteur du véhicule).

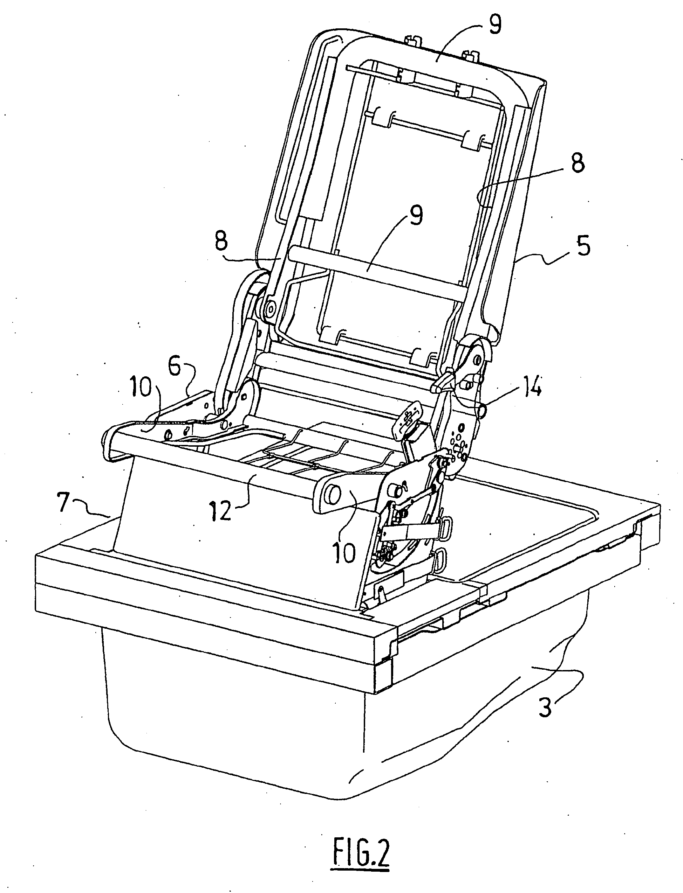

En se reportant à la figure 2 qui montre le siège en perspective, il apparaît que ce dernier est constitué essentiellement de trois éléments articulés les uns par rapport aux autres, à savoir un dossier 5, une assise 6 et un piètement 7.

Le dossier 5 est constitué par une structure qui, dans l'exemple représenté, comprend deux montants latéraux 8 reliés par des barres transversales 9 ; le dossier peut bien entendu être recouvert d'un coussin de garniture de type mousse recouverte d'une matière textile. Le dossier 5 peut recevoir un appui tête qui comme cela est le cas pour le siège représenté à la figure 2 peut être réglé en hauteur.

Le dossier 5 est articulé sur l'assise 6 de siège qui, dans l'exemple représenté, est constituée par deux brancards latéraux 10 reliés à chacune de leurs extrémités par des traverses tubulaires 12. L'articulation du dossier sur l'assise peut se faire de manière conventionnelle par des secteurs dentés concave et convexe qui peuvent s'engrener dans une multitude de positions correspondant au souhait du passager qui prend place dans le siège. On peut voir sur la figure 2, un levier 14 qui permet de désengrener le dossier 5 de l'assise 6 pour en régler la position angulaire.

Le piètement 7 du siège selon l'invention peut être constitué par deux flasques 15 qui viennent prendre place de part et d'autre de l'assise 6 et qui sont fixés au plancher par deux profilés 16 qui sont positionnés de part et d'autre de la cuvette 3.

Les liaisons fonctionnelles du piètement 7, d'une part, avec l'assise 5 et, d'autre part, avec le plancher 2 du véhicule sont tout à fait spécifiques à l'invention.

En effet, il est prévu que le piètement 7 soit fixé à l'assise 6 par une liaison pivot P1 et par une liaison déconnectable D1.

La liaison pivot P1 assurant la liaison entre les deux flasques 15 et l'assise 6 peut être constituée par deux axes 19 qui dépassent latéralement de l'assise 6 et peuvent pivoter dans un palier ménagé dans chacun des deux flasques 15. On peut remarquer que chacun des deux axes 15 est positionné au milieu de chacune des faces latérales de l'assise 6.

La liaison déconnectable D1 assurant la liaison entre les deux flasques 15 et l'assise 6 peut être constituée par deux doigts 20 qui dépassent chacun des flasques 15 et par deux crochets 22 mobiles embarqués sur chacun des brancards latéraux 10 qui peuvent venir s'engager sur les doigts 20. Selon la position des crochets 22 mobiles de la liaison déconnectable D1, l'assise 6 peut être totalement fixe et verrouillée par rapport au piètement 7 ou bien l'assise 6 peut être mise en rotation par rapport au piètement 7. La commande de la liaison déconnectable D1 peut être, par exemple réalisée par une sangle connectée aux crochets 22; une traction sur cette sangle permet de libérer les crochets 22. Chaque doigt 20 est positionné sensiblement au niveau de l'articulation du dossier sur l'assise.

Au niveau de la fixation de chacun des flasques 15 avec le plancher 2 et, plus précisément avec des profilés 16 eux-mêmes fixés sur le plancher 2, il est prévu un mode de liaison analogue à celui prévu pour l'assise à savoir une liaison pivot P2 et une liaison déconnectable D2.

La liaison pivot P2 est, dans l'exemple représenté, constituée par un axe 24 qui s'étend d'un profilé 16 à l'autre ; chacun des flasques est pourvu d'un palier lui permettant de pivoter par rapport à l'axe 24.

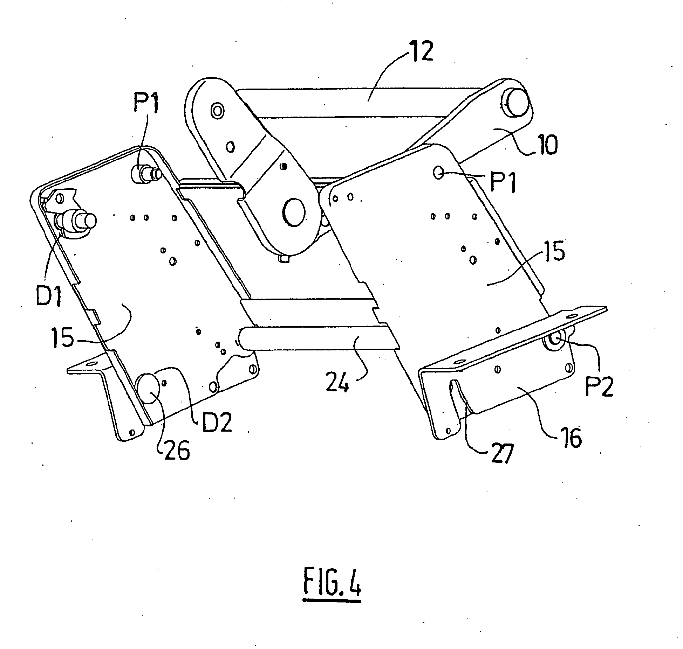

En ce qui concerne la fixation déconnectable D2, comme on peut le voir sur la figure 4, il peut être prévu que chacun des flasques 15 soit équipé d'un doigt 26 dépassant de sa surface latérale extérieure qui peut s'engager dans une lumière 27 prévue dans chacun des profilés 16.

On note également que les deux flasques 15 sont reliés entre eux par une plaque transversale 29 qui contribue à rigidifier le piètement 7. Cette disposition est importante puisque, en cas brutal de décélération, c'est le piètement 7 qui sera chargé de transmettre la décélération depuis le passager et le siège jusqu'au plancher.

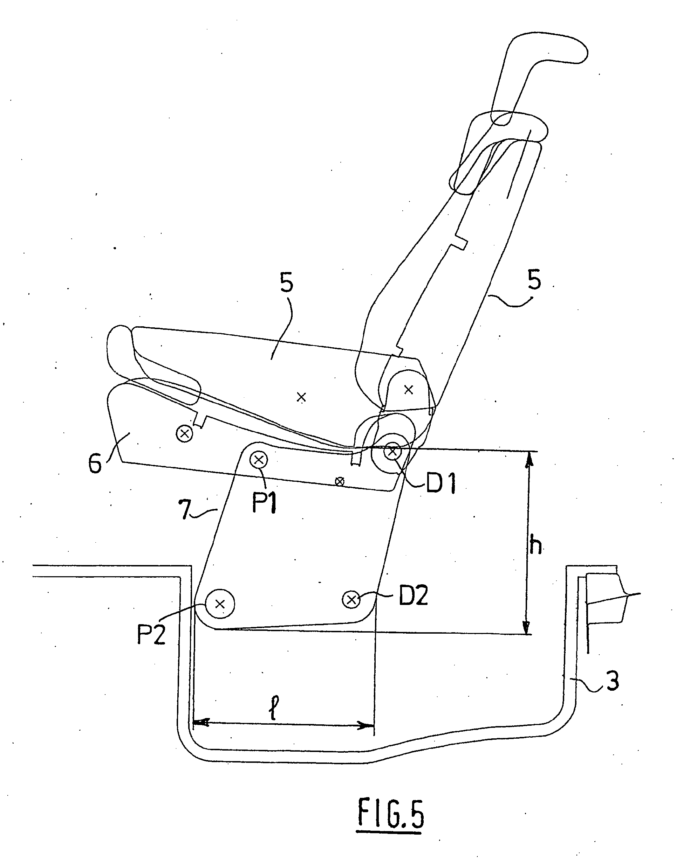

En référence aux figures 5 à 7 le fonctionnement du siège apparaît être le suivant.

En commençant la description de l'escamotage du siège à partir de la figure 5 qui représente le siège dans sa position déployée, c'est-à-dire sa position d'usage, on peut noter que la première étape consiste à rabattre le dossier 5 contre l'assise 6 du siège. Le siège est alors dans sa configuration dite tablette. Le fait que le siège puisse prendre une configuration tablette n'est pas en soi propre au siège selon l'invention. En revanche, les étapes qui suivent sont tout à fait spécifiques au siège selon l'invention.

En effet, en déconnectant la liaison D1 entre chacun des flasques 15 et l'assise 6, l'assise 6 du siège est alors susceptible de connaître une rotation par rapport aux liaisons pivots P1 qui la lie à chacun des flasques 15. La rotation de l'assise 6 peut être assistée par des éléments élastiques de type ressort à spires placés sur les axes 19, vérin à gaz ou encore peut être assistée par une motorisation électrique.

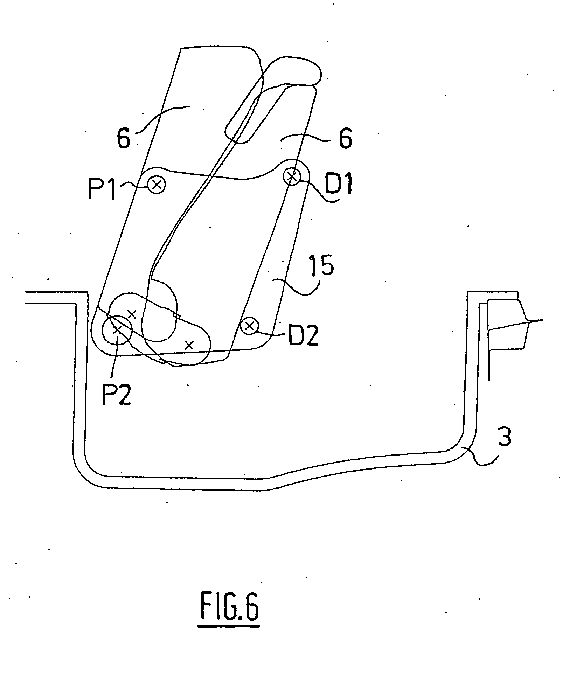

On voit sur la figure 6 le siège dans sa configuration dite compacte dans laquelle l'assise 6 et, par conséquent le dossier 5 qui lui est alors adjacent, a basculé par rapport à la liaison pivot P1 qui lie les flasques 15 à l'assise. La liaison pivot P1 qui est sollicitée pour cette étape de l'escamotage apparaît avec un cercle en trait gras pour souligner son action. Des butées prévues sur l'un ou sur les deux flasques 15 peuvent bloquer l'assise 6 et ainsi limiter l'amplitude de la rotation de l'assise.

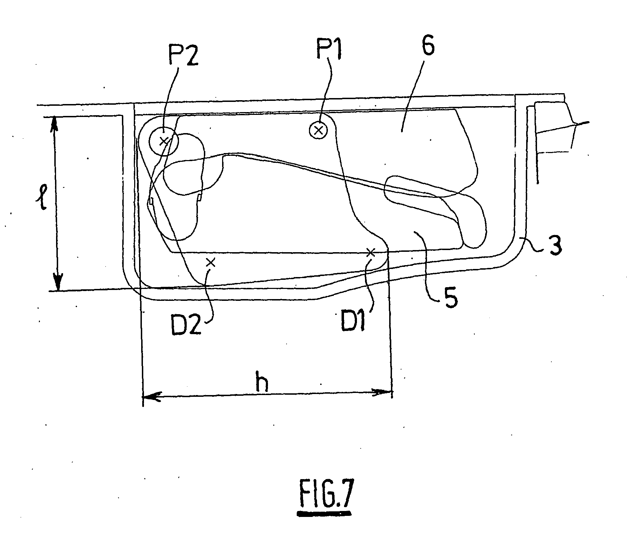

L'étape suivante dans l'escamotage du siège consiste à débrayer les liaisons déconnectables D2 qui assurent la liaison de chacun des flasques 15 avec les profilés 16 présents dans le plancher 3. Lorsque ces deux liaisons ont été débrayées, l'ensemble constitué par le siège dans sa configuration compacte peut alors pivoter par rapport aux deux liaisons pivots P1 liant chacun des flasques 15 au plancher. La liaison P2 qui est sollicitée au cours de cette phase de l'escamotage apparaît cerclé d'un trait gras sur la figure 7.

Le siège vient alors se ranger dans la cuvette prévue dans le plancher du véhicule.

Comme on l'a vu, le siège selon l'invention peut être replié d'une manière extrêmement simple, puisque la cinématique de repliage ne met en oeuvre aucune des bielles qui sont généralement mises en oeuvre dans les sièges de l'art antérieur. A l'inverse; le siège selon l'invention ne prévoit que des rotations pour son escamotage et pour son déploiement. En l'occurrence, il s'agit d'une part, d'une rotation de l'assise par rapport aux deux flasques, et d'autre part, une rotation des deux flasques par rapport au plancher.

Cette disposition est tout à fait intéressante car le fait de présenter exclusivement des liaisons pivots fait que la cinématique du siège selon l'invention est relativement robuste et donc peu susceptible de coincement et/ou de bruits parasites.

En outre, elle peut être très facilement motorisée en embarquant dans le siège des moteurs électriques au niveau de chacun des liaisons P1, D1,P2,D2.

Un autre point qu'il est tout à fait significatif de noter est que, en position déployée, le siège peut se trouver à une altitude relativement importante par rapport au plancher.

En effet, comme on peut le voir sur la figure 7, par exemple, la dimension I qui correspond à la longueur du flasque 15 est celle qui conditionne l'encombrement du siège en position repliée.

En revanche, la hauteur de chacun des flasques h n'est pas critique pour le repliement du siège ; ceci fait que chacun des flasques peut présenter une hauteur h suffisamment importante pour permettre un bon confort du siège.

Bien entendu, l'invention n'est pas limitée à la forme de réalisation décrite ci-dessus à titre d'exemple non limitatif, mais elle en embrasse au contraire toutes les formes de réalisation si comprises dans le cadre de l'invention telle que définie par les revendications. Ainsi, l'invention peut tout aussi bien s'appliquer à un siège individuel qu'à une banquette à deux ou trois places.

## Revendications

1. Siège (1) pour véhicule automobile pouvant prendre une configuration déployée ou une configuration escamotée dans laquelle le siège est rangé dans une cuvette (3) ménagée dans le plancher (2) du véhicule, comprenant un piètement (7) et une assise (6) sur laquelle est articulé un dossier (5) pouvant faire passer le siège de la configuration déployée à une configuration tablette dans laquelle le dossier est rabattu contre l'assise, ledit piètement (7) est en surplomb de la cuvette (3); **caractérisé en ce que**
l'assise (6) est reliée audit piètement (7) par une première liaison pivot P1 et par une première liaison déconnectable D1 dont la déconnexion permet, par une rotation primaire, de faire passer le siège de sa configuration tablette à une configuration compacte dans laquelle l'assise (6) pivote en direction de la cuvette (3) pour se mettre sensiblement perpendiculaire au plancher du véhicule, et **en ce que**
ledit piètement est relié au plancher (2) par une seconde liaison pivot P2 et par une seconde liaison déconnectable D2 dont la déconnexion permet, par une rotation secondaire du piètement (7) en direction de la cuvette (3), de faire passer le siège de sa configuration compacte à sa configuration escamotée dans laquelle le dossier (5) est en appui contre la paroi de fond de la cuvette, l'assise (6) est au dessus du dossier (5) et le piètement (7) se trouve de part et d'autre de l'assise et du dossier.

2. Siège selon la revendication 1, **caractérisé en ce que** le piètement (7) comprend, positionnés de part et d'autre de l'assise, deux flasques (15) sensiblement quadrangulaires dont un premier côté reçoit la liaison pivot P2 avec le plancher et la liaison déconnectable D2 avec le plancher et dont un second côté opposé au premier reçoit la liaison pivot P1 avec l'assise et la liaison déconnectable D2 avec l'assise.

3. Siège selon la revendication 2, **caractérisé en ce que** les deux liaisons pivot P1 qui assurent la liaison entre chacun des flasques (15) et l'assise (6) sont situées sensiblement au niveau du point milieu de chacune des faces latérales de l'assise (6).

4. Siège selon l'une de revendication 2 à 3, **caractérisé en ce que** le premier coté et le second coté de chaque flasque (15) présentent une longueur I qui correspond sensiblement à la profondeur de la cuvette (3).

5. Siège selon l'une des revendications 2 à 4, **caractérisé en ce qu'**une plaque transversale (29) relie les deux flasques (15).

6. Siège selon l'une des revendications 2 à 5, **caractérisé en ce que** chacun des flasques (15) est fixé à des profilés disposés de part et d'autre de la cuvette (3).

7. Siège selon la revendication 6, **caractérisé en ce que** la liaison pivot P2 assurant la liaison entre les deux flasques (15) et le plancher (2) du véhicule présente un axe (24) qui s'étend entre les deux profilés, sur lequel sont engagés les deux flasques.

8. Siège selon l'une des revendications 6 ou 7, **caractérisé en ce que** la liaison déconnectable D2 assurant la liaison entre les deux flasques et le plancher du véhicule présente un doigt (26) disposé sur la face extérieure de chaque flasque (15) pouvant s'engager dans une lumière (27) pratiquée dans chaque profilé (16).

9. Siège selon l'une des revendications 6 à 8, **caractérisé en ce que** la liaison pivot P1 assurant la liaison entre les deux flasques (15) et l'assise (6) comprend deux axes disposés sensiblement au milieu des cotés latéraux de l'assise, chacun de ses axes étant engagé dans un palier ménagé dans chacun des flasques.

10. Siège selon l'une des revendications 6 à 9, **caractérisé en ce que** la liaison déconnectable D1 entre chacune des flasques et l'assise comprend deux doigts (20) fixés sur chacun des flasques sur lesquels viennent s'engager des crochets (22) embarqués sur l'assise (6).

11. Siège selon l'une des revendications 2 à 10, **caractérisé en ce que** l'un des flasques (15) reçoit un élément d'ancrage d'une boucle de ceinture de sécurité.

12. Siège selon l'une des revendications 1 à 11, **caractérisé en ce qu'**un système à deux secteurs dentés disposés respectivement sur le dossier (5) et sur l'assise (6) permet de régler la position angulaire du dossier (5) par rapport à l'assise (6).

## Claims

1. A seat (1) for motor vehicles, which can adopt an unfolded configuration or a retracted configuration in which the seat is stowed in a recess (3) made in the floor (2) of the vehicle, comprising a base (7) and a seating surface (6) on which a backrest (5) is hinged, which can transfer the seat from the unfolded configuration into a table configuration in which the backrest is folded down on the seating surface, said base (7) overhanging the recess (3),
**characterized in that**
the seating surface (6) is linked to said base (7) by a first pivot link P1 and by a first disconnectable link D1, the disconnection of which allows by a first rotation for the seat to be transferred from the table configuration thereof to a compact configuration in which the seating surface (6) pivots in the direction of the recess (3) in order to stand substantially perpendicularly to the floor of the vehicle,
and **in that** said base is linked to the floor (2) by a second pivot link P2 and by a second disconnectable link D2, the disconnection of which allows by a second rotation of the base (7) in the direction of the recess (3) for the seat to be transferred from the compact configuration thereof to the retracted configuration thereof in which the backrest (5) is bearing against the bottom wall of the recess, the seating surface (6) is above the backrest (5), and the base (7) is located on either side of the seating surface and the backrest.

2. The seat according to claim 1, **characterized in that** the base (7) comprises, positioned on either side of the seating surface, two substantially quadrangular flanges (15), a first side of which receives the pivot link P2 with the floor and the disconnectable link D2 with the floor, and a second side opposite the first one receives the pivot link P1 with the seating surface and the disconnectable link D2 with the seating surface.

3. The seat according to claim 2, **characterized in that** the two pivot links P1, which ensure the link between each of the flanges (15) and the seating surface (6) are located substantially at the center point of each of the side faces of the seating surface (6).

4. The seat according to any of claims 2 to 3, **characterized in that** the first side and the second side of each flange (15) have a length I substantially corresponding to the depth of the recess (3).

5. The seat according to any of claims 2 to 4, **characterized in that** a transverse plate (29) links both flanges (15).

6. The seat according to any of claims 2 to 5, **characterized in that** each of the flanges (15) is fastened to profiles arranged on either side of the recess (3).

7. The seat according to claim 6, **characterized in that** the pivot link P2 ensuring the link between the two flanges (15) and the floor (2) of the vehicle has an axis (24) extending between both profiles, on which both flanges are engaged.

8. The seat according to any of claims 6 or 7, **characterized in that** the disconnectable link D2 ensuring the link between both flanges and the floor of the vehicle has a finger (26) arranged on the outer face of each flange (15) which can engage into a lumen (27) made in each profile (16).

9. The seat according to any of claims 6 to 8, **characterized in that** the pivot link P1 ensuring the link between both flanges (15) and the seating surface (6) comprises two axes arranged substantially in the middle of the lateral sides of the seating surface, each of the axes thereof being engaged into a bearing made in each of the flanges.

10. The seat according to any of claims 6 to 9, **characterized in that** the disconnectable link D1 between each of the flanges and the seating surface comprises two fingers (20) fastened on each of the flanges on which hooks (22) carried by the seating surface (6) come into engagement.

11. The seat according to any of claims 2 to 10, **characterized in that** one of the flanges (15) receives an anchoring member of a safety belt buckle.

12. The seat according to any of claims 1 to 11, **characterized in that** a system with two serrated sectors arranged respectively on the backrest (5) and on the seating surface (6) allows adjusting the angular position of the backrest (5) with respect to the seating surface (6).

## Patentansprüche

1. Sitz (1) für Kraftfahrzeuge, der eine ausgeklappte Konfiguration oder ein eingeklappte Konfiguration, in welcher der Sitz in einer im Boden (2) des Fahrzeugs eingerichteten Versenkung (3) verstaut ist, einnehmen kann, umfassend ein Sitzgestell (7) und eine Sitzfläche (6), an der eine Rückenlehne (5) angelenkt ist, die den Sitz von der ausgeklappten Konfiguration in eine Tischkonfiguration versetzen kann, in der die Rückenlehne auf die Sitzfläche umgeklappt ist, wobei das Sitzgestell (7) über die Versenkung (3) auskragt,
**dadurch gekennzeichnet, dass**
die Sitzfläche (6) mit dem Sitzgestell (7) über eine erste Drehverbindung P1 und über ein erste lösbare Verbindung D1 verbunden ist, deren Lösung es durch eine erste Drehung ermöglicht, den Sitz von seiner Tischkonfiguration in eine platzsparende Konfiguration zu versetzen, in der die Sitzfläche (6) in Richtung der Versenkung (3) verschwenkt wird, um sich zum Boden des Fahrzeugs im Wesentlichen senkrecht zu begeben,
und dass das Sitzgestell mit dem Boden (2) über eine zweite Drehverbindung P2 und eine zweite lösbare Verbindung D2 verbunden ist, deren Lösung es durch eine zweite Drehung des Sitzgestells (7) in Richtung der Versenkung (3) ermöglicht, den Sitz von seiner platzsparenden Konfiguration in seine eingeklappte Konfiguration zu versetzen, in der die Rückenlehne (5) sich an der Bodenwand der Versenkung abstützt, die Sitzfläche (6) sich über der Rückenlehne (5) befindet und das Sitzgestell (7) sich auf beiden Seiten der Sitzfläche und der Rückenlehne befindet.

2. Sitz nach Anspruch 1, **dadurch gekennzeichnet, dass** das Sitzgestell (7) auf beiden Seiten der Sitzfläche positioniert zwei im Wesentlichen viereckige Flansche (15) umfasst, deren erste Seite die Drehverbindung P2 mit dem Boden und die lösbare Verbindung D2 mit dem Boden aufnimmt, und von denen eine zweite Seite gegenüber der ersten die Drehverbindung P1 mit der Sitzfläche und die lösbare Verbindung D2 mit der Sitzfläche aufnimmt.

3. Sitz nach Anspruch 2, **dadurch gekennzeichnet, dass** die beiden Drehverbindungen P1, welche die Verbindung zwischen jedem der Flansche (15) und der Sitzfläche (6) sicherstellen, sich im Wesentlichen im Mittelpunkt jeder der Seitenflächen der Sitzfläche (6) befinden.

4. Sitz nach einem der Ansprüche 2 bis 3, **dadurch gekennzeichnet, dass** die erste Seite und die zweite Seite jedes Flansches (15) eine Länge I aufweisen, die im Wesentlichen der Tiefe der Versenkung (3) entspricht.

5. Sitz nach einem der Ansprüche 2 bis 4, **dadurch gekennzeichnet, dass** eine Querplatte (29) die beiden Flansche (15) verbindet.

6. Sitz nach einem der Ansprüche 2 bis 5, **dadurch gekennzeichnet, dass** jeder der Flansche (15) an Profilen befestigt ist, die auf beiden Seiten der Versenkung (3) angeordnet sind.

7. Sitz nach Anspruch 6, **dadurch gekennzeichnet, dass** die Drehverbindung P2, welche die Verbindung zwischen den beiden Flanschen (15) und dem Boden (2) des Fahrzeugs sicherstellt, eine Achse (24) aufweist, die sich zwischen den beiden Profilen erstreckt und auf der die beiden Flansche in Eingriff stehen.

8. Sitz nach einem der Ansprüche 6 oder 7, **dadurch gekennzeichnet, dass** die lösbare Verbindung D2, welche die Verbindung zwischen den beiden Flanschen und dem Boden des Fahrzeugs sicherstellt, einen Zapfen (26) aufweist, der auf der Außenseite jedes Flansches (15) angeordnet ist und in eine Öffnung (27) eingreifen kann, die in jedem Profil (16) eingerichtet ist.

9. Sitz nach einem der Ansprüche 6 bis 8, **dadurch gekennzeichnet, dass** die Drehverbindung P1, welche die Verbindung zwischen den beiden Flanschen (15) und der Sitzfläche (6) sicherstellt, zwei Achsen umfasst, die im Wesentlichen in der Mitte der seitlichen Seiten der Sitzfläche angeordnet sind, wobei jede ihrer Achsen in ein Lager eingreift, das in jedem der Flansche eingerichtet ist.

10. Sitz nach einem der Ansprüche 6 bis 9, **dadurch gekennzeichnet, dass** die lösbare Verbindung D1 zwischen jedem der Flansche und der Sitzfläche zwei Zapfen (20) umfasst, die an jedem der Flansche befestigt sind, an denen Haken (22) eingreifen, die von der Sitzfläche (6) getragen werden.

11. Sitz nach einem der Ansprüche 2 bis 10, **dadurch gekennzeichnet, dass** einer der Flansche (15) ein Verankerungselement einer Sicherheitsgurtschnalle aufnimmt.

12. Sitz nach einem der Ansprüche 1 bis 11, **dadurch gekennzeichnet, dass** ein System mit zwei gezahnten Bereichen, die jeweils an der Rückenlehne (5) und an der Sitzfläche (6) angeordnet sind, es ermöglicht, die Winkelposition der Rückenlehne (5) im Verhältnis zur Sitzfläche (6) einzustellen.
